# EUROPEAN PATENT APPLICATION

(11) **EP 4 531 361 A1**
(43) Date of publication of application: **02.04.2025**
(21) Application number: 23830053.7
(22) Date of filing: 20.06.2023
(51) Int. Cl.: H04L 41/0813, H04L 41/08, H04L 49/351

(54) **MODE NEGOTIATION METHOD AND APPARATUS, DEVICE, SYSTEM, AND COMPUTER READABLE STORAGE MEDIUM**

(30) Priority: 30.06.2022 CN 202210772847
(71) Applicant: Huawei Technologies Co., Ltd., Shenzhen, Guangdong 518129 (CN)
(72) Inventor: DING, Li, Shenzhen, Guangdong 518129 (CN); SUN, Desheng, Shenzhen, Guangdong 518129 (CN); ZHANG, Chengmin, Shenzhen, Guangdong 518129 (CN); LIU, Yongzhi, Shenzhen, Guangdong 518129 (CN)
(74) Representative: Gill Jennings & Every LLP
(86) International application number: PCT/CN2023/101397
(87) International publication number: WO 2024/001874

(57) **Abstract**

This application discloses a mode negotiation method and apparatus, a device, a system, and a computer-readable storage medium, and relates to the field of communication technologies. The method includes: a first device receives a first data stream sent by a second device, where the first data stream includes a plurality of first AM code blocks, and a spacing between the plurality of first AM code blocks corresponds to an operating mode of the second device; and then the first device locks, according to a first reference spacing corresponding to at least one operating mode of the first device, the first AM code blocks included in the first data stream, and determines the operating mode of the second device according to a first reference spacing at which the first AM code blocks are successfully locked. Because the spacing between the plurality of AM code blocks corresponds to the operating mode, by locking the first AM code blocks in the first data stream according to the at least one first reference spacing, the first device can determine the operating mode of the second device according to the first reference spacing at which the first AM code blocks are successfully locked. The mode negotiation method is simple and efficient.

## Description

This application claims priority to Chinese Patent Application No. 202210772847.6, filed on June 30, 2022 and entitled "MODE NEGOTIATION METHOD AND APPARATUS, DEVICE, SYSTEM, AND COMPUTER-READABLE STORAGE MEDIUM", which is incorporated herein by reference in its entirety.

### TECHNICAL FIELD

This application relates to the field of communication technologies, and in particular, to a mode negotiation method and apparatus, a device, a system, and a computer-readable storage medium.

### BACKGROUND

With the development of technologies such as high-performance computing (high-performance computing, HPC) and flat storage (memory fabric), it is increasingly difficult for devices of a standard Ethernet architecture to meet low-latency service requirements. Therefore, devices of a new Ethernet architecture emerge. The new Ethernet architecture removes steps such as bit interleaving and bit multiplexing in the standard Ethernet architecture to meet the low-latency service requirements. However, because a device of the new Ethernet architecture and a device of the standard Ethernet architecture have different operating modes, a mode negotiation method is required, so that the device of the new Ethernet architecture can switch to the same operating mode as the device of the standard Ethernet architecture, implementing interconnection with the device of the standard Ethernet architecture.

In a related technology, mode negotiation is implemented by configuring an auto-negotiation (auto-negotiation, AN) layer on electrical interfaces of the devices of the above-mentioned two architectures. The AN layer includes a base page (base page), and the base page includes operating mode information of a device. The device of the new Ethernet architecture receives a base page sent by the device of the standard Ethernet architecture, determines an operating mode of the device of the standard Ethernet architecture based on the base page, and then operates in the operating mode, thereby completing mode negotiation. However, because the AN layer is present only on an electrical interface, the mode negotiation method provided in the related technology is applicable only to a device having an electrical interface, resulting in a limited scope of application.

### SUMMARY

This application provides a mode negotiation method and apparatus, a device, a system, and a computer-readable storage medium, to implement mode negotiation between devices of two Ethernet architectures that have different operating modes in such a way that the scope of application is wider.

According to a first aspect, a mode negotiation method is provided. The method includes: a first device receives a first data stream sent by a second device, where the first data stream includes a plurality of first alignment marker (alignment marker, AM) code blocks, and a spacing between the plurality of first AM code blocks corresponds to an operating mode of the second device; and then the first device locks, according to a first reference spacing corresponding to at least one operating mode of the first device, the first AM code blocks included in the first data stream, and determines the operating mode of the second device according to a first reference spacing at which the first AM code blocks are successfully locked.

Because the spacing between the plurality of AM code blocks corresponds to the operating mode, by locking the first AM code blocks in the first data stream according to the at least one first reference spacing, the first device can determine the operating mode of the second device according to the first reference spacing at which the first AM code blocks are successfully locked. The mode negotiation method is simple and efficient. In addition, because the operating mode of the second device corresponds to the spacing between the plurality of first AM code blocks, the second device does not need to transmit operating mode information other than the AM code blocks to the first device. In this method, a manner of transmitting the operating mode information is simpler, and mode negotiation overheads are relatively low. In addition, the method is applicable to both a device having an electrical interface and a device having an optical interface, providing a relatively wide scope of application.

In a possible implementation, there are a plurality of first reference spacings at which the first AM code blocks are successfully locked, and the determining the operating mode of the second device according to a first reference spacing at which the first AM code blocks are successfully locked includes: determining, from operating modes corresponding to the plurality of first reference spacings at which the first AM code blocks are successfully locked, an operating mode with a highest priority as the operating mode of the second device.

In a possible implementation, there are a plurality of first reference spacings at which the first AM code blocks are successfully locked, and the determining the operating mode of the second device according to a first reference spacing at which the first AM code blocks are successfully locked includes: determining, as the operating mode of the second device, an operating mode corresponding to a smallest first reference spacing among the plurality of first reference spacings at which the first AM code blocks are successfully locked. When there are the plurality of first reference spacings at which the first AM code blocks are successfully locked, a manner of determining the operating mode of the second device in this method is relatively flexible.

In a possible implementation, after the determining the operating mode of the second device according to a first reference spacing at which the first AM code blocks are successfully locked, the method further includes: the first device operates in the operating mode of the second device.

In a possible implementation, that the first device operates in the operating mode of the second device includes: the first device sends a second data stream to the second device, where the second data stream includes a plurality of second AM code blocks, and a spacing between the plurality of second AM code blocks is the same as the spacing between the plurality of first AM code blocks.

In a possible implementation, the method further includes: the first device receives a third data stream sent by the second device, where the third data stream includes a plurality of third AM code blocks, and a spacing between the plurality of third AM code blocks corresponds to the operating mode of the second device; and the first device locks, according to the at least one first reference spacing, the third AM code blocks included in the third data stream, and in response to a failure in locking the third AM code blocks included in the third data stream, the first device operates in a target operating mode from the at least one operating mode of the first device.

In a possible implementation, that the first device operates in a target operating mode from the at least one operating mode of the first device includes: the first device sends a fourth data stream to the second device, where the fourth data stream includes a plurality of fourth AM code blocks, and a spacing between the plurality of fourth AM code blocks corresponds to the target operating mode.

In a possible implementation, the target operating mode is an operating mode with a highest priority in the at least one operating mode.

In a possible implementation, a first reference spacing corresponding to the target operating mode is a smallest value of the first reference spacing corresponding to the at least one operating mode.

In a possible implementation, the target operating mode is a standard Ethernet mode. **In** the case of the failure in locking the third AM code blocks included in the third data stream, a type of the target operating mode is relatively flexible.

According to a second aspect, a mode negotiation method is provided. The method includes: a second device obtains a first data stream, where the first data stream includes a plurality of first AM code blocks, and a spacing between the plurality of first AM code blocks corresponds to an operating mode of the second device; and then the second device sends the first data stream to the first device.

Because the spacing between the plurality of AM code blocks corresponds to the operating mode, the second device sends the first data stream including the plurality of first AM code blocks to the first device, so that the first device can determine the operating mode of the second device. The mode negotiation method is simple and efficient. In addition, because the operating mode of the second device can be determined based on the first reference spacing at which the first AM code blocks are successfully locked, the second device does not need to transmit operating mode information other than the AM code blocks to the first device. In this method, a manner of transmitting the operating mode information is simpler, and mode negotiation overheads are relatively low. In addition, the method is applicable to both a device having an electrical interface and a device having an optical interface, providing a relatively wide scope of application.

In a possible implementation, the method further includes: the second device receives a fourth data stream, where the fourth data stream includes a plurality of fourth AM code blocks, and a spacing between the plurality of fourth AM code blocks corresponds to an operating mode of the first device; and the second device locks, according to at least one second reference spacing, the fourth AM code blocks included in the fourth data stream, and in response to a failure in locking the fourth AM code blocks included in the fourth data stream, performs the operations of obtaining the first data stream and sending the first data stream to the first device, where one second reference spacing corresponds to one operating mode of the second device. When the fourth AM code blocks included in the fourth data stream fail to be locked, the operations of obtaining the first data stream and sending the first data stream to the first device are performed, so that upon receiving the first data stream, the first device can perform mode negotiation with the second device again based on the first data stream.

In a possible implementation, an operating mode corresponding to the spacing between the plurality of first AM code blocks is an operating mode with a highest priority in the at least one operating mode of the second device.

In a possible implementation, the spacing between the plurality of first AM code blocks is a smallest value of the second reference spacing corresponding to the at least one operating mode of the second device. In the method, a spacing between the plurality of first AM code blocks included in the first data stream is relatively flexible.

According to a third aspect, a mode negotiation apparatus is provided. The apparatus is used in a first device, and the apparatus includes:
a receiving module, configured to receive a first data stream sent by a second device, where the first data stream includes a plurality of first alignment marker AM code blocks, and a spacing between the plurality of first AM code blocks corresponds to an operating mode of the second device; and
a determining module, configured to lock, according to at least one first reference spacing, the first AM code blocks included in the first data stream, and determine the operating mode of the second device according to a first reference spacing at which the first AM code blocks are successfully locked, where one first reference spacing corresponds to one operating mode of the first device.

In a possible implementation, there are a plurality of first reference spacings at which the first AM code blocks are successfully locked, and the determining module is configured to determine, from operating modes corresponding to the plurality of first reference spacings at which the first AM code blocks are successfully locked, an operating mode with a highest priority as the operating mode of the second device.

In a possible implementation, there are a plurality of first reference spacings at which the first AM code blocks are successfully locked, and the determining module is configured to determine, as the operating mode of the second device, an operating mode corresponding to a smallest first reference spacing among the plurality of first reference spacings at which the first AM code blocks are successfully locked.

In a possible implementation, the determining module is further configured to operate in the operating mode of the second device.

In a possible implementation, the determining module is configured to send a second data stream to the second device, where the second data stream includes a plurality of second AM code blocks, and a spacing between the plurality of second AM code blocks is the same as the spacing between the plurality of first AM code blocks.

In a possible implementation, the receiving module is further configured to receive a third data stream sent by the second device, where the third data stream includes a plurality of third AM code blocks, and a spacing between the plurality of third AM code blocks corresponds to the operating mode of the second device; and the determining module is further configured to lock, according to the at least one first reference spacing, the third AM code blocks included in the third data stream, and in response to a failure in locking the third AM code blocks included in the third data stream, operate in a target operating mode from the at least one operating mode of the first device.

In a possible implementation, the determining module is configured to send a fourth data stream to the second device, where the fourth data stream includes a plurality of fourth AM code blocks, and a spacing between the plurality of fourth AM code blocks corresponds to the target operating mode.

In a possible implementation, the target operating mode is an operating mode with a highest priority in the at least one operating mode.

In a possible implementation, a first reference spacing corresponding to the target operating mode is a smallest value of the first reference spacing corresponding to the at least one operating mode.

In a possible implementation, the target operating mode is a standard Ethernet mode.

According to a fourth aspect, a mode negotiation apparatus is provided. The apparatus is used in a second device, and the apparatus includes:
an obtaining module, configured to obtain a first data stream, where the first data stream includes a plurality of first AM code blocks, and a spacing between the plurality of first AM code blocks corresponds to an operating mode of the second device; and
a sending module, configured to send the first data stream to a first device.

In a possible implementation, the obtaining module is further configured to receive a fourth data stream, where the fourth data stream includes a plurality of fourth AM code blocks, and a spacing between the plurality of fourth AM code blocks corresponds to an operating mode of the first device; and lock, according to at least one second reference spacing, the fourth AM code blocks included in the fourth data stream, and in response to a failure in locking the fourth AM code blocks included in the fourth data stream, perform the operations of obtaining the first data stream and sending the first data stream to the first device, where one second reference spacing corresponds to one operating mode of the second device.

In a possible implementation, an operating mode corresponding to the spacing between the plurality of first AM code blocks is an operating mode with a highest priority in the at least one operating mode of the second device.

In a possible implementation, the spacing between the plurality of first AM code blocks is a smallest value of the second reference spacing corresponding to the at least one operating mode of the second device.

According to a fifth aspect, a network device is provided, including a processor. The processor is coupled to a memory. The memory stores at least one program instruction or code, and the at least one program instruction or the code is loaded and executed by the processor, to enable the network device to implement any mode negotiation method according to the first aspect or the second aspect.

According to a sixth aspect, a network system is provided. The system includes a first device and a second device. The first device is configured to perform any mode negotiation method according to the first aspect, and the second device is configured to perform any mode negotiation method according to the second aspect.

According to a seventh aspect, a computer-readable storage medium is provided. The storage medium stores at least one program instruction or code, and when the program instruction or the code is loaded and executed by a processor, a computer is enabled to implement any mode negotiation method according to the first aspect or the second aspect.

According to an eighth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform any mode negotiation method according to the first aspect or the second aspect.

For example, there are one or more processors, and there are one or more memories.

For example, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated on the same chip, or may be separately disposed on different chips. A type of the memory and a manner of disposing the memory and the processor are not limited in this application.

According to a ninth aspect, a computer program product or a computer program is provided. The computer program product or the computer program includes computer program code, and when the computer program code is run by a computer, the computer is enabled to perform any mode negotiation method according to the first aspect or the second aspect.

According to a tenth aspect, a chip is provided, including a processor, configured to invoke, from a memory, instructions stored in the memory and run the instructions, to enable a communication device on which the chip is installed to perform any mode negotiation method according to the first aspect or the second aspect.

For example, the chip further includes an input interface, an output interface, and the memory. The input interface, the output interface, the processor, and the memory are connected through an internal connection path.

It should be understood that, for beneficial effects achieved by the technical solutions of the third aspect to the tenth aspect of this application and the corresponding possible implementations thereof, refer to the technical effects of the first aspect and the second aspect and the corresponding possible implementations thereof. Details are not described herein again.

### BRIEF DESCRIPTION OF DRAWINGS

FIG. 1 is a diagram of an implementation environment of a mode negotiation method according to an embodiment of this application;
FIG. 2 is a diagram of another implementation environment of the mode negotiation method according to an embodiment of this application;
FIG. 3 is a diagram of still another implementation environment of the mode negotiation method according to an embodiment of this application;
FIG. 4 is a diagram of still another implementation environment of the mode negotiation method according to an embodiment of this application;
FIG. 5 is a flowchart of a mode negotiation method according to an embodiment of this application;
FIG. 6 is a diagram of an operating process of a first device according to an embodiment of this application;
FIG. 7 is a diagram of another operating process of the first device according to an embodiment of this application;
FIG. 8 is a diagram of still another operating process of the first device according to an embodiment of this application;
FIG. 9 is a diagram of a first data stream according to an embodiment of this application;
FIG. 10 is a diagram of a process of performing a mode negotiation method by a first device according to an embodiment of this application;
FIG. 11 is a flowchart of another mode negotiation method according to an embodiment of this application;
FIG. 12 is a diagram of a mode negotiation process between a first device and a second device according to an embodiment of this application;
FIG. 13 is a diagram of another mode negotiation process between a first device and a second device according to an embodiment of this application;
FIG. 14 is a diagram of still another mode negotiation process between a first device and a second device according to an embodiment of this application;
FIG. 15 is a diagram of a structure of a mode negotiation apparatus according to an embodiment of this application;
FIG. 16 is a diagram of a structure of another mode negotiation apparatus according to an embodiment of this application;
FIG. 17 is a diagram of a structure of a network device according to an embodiment of this application; and
FIG. 18 is a diagram of a structure of another network device according to an embodiment of this application.

### DESCRIPTION OF EMBODIMENTS

Terms used in embodiments of this application are merely used to explain embodiments of this application, but are not intended to limit this application. The following describes embodiments of this application with reference to the accompanying drawings.

For ease of understanding, the terms in embodiments of this application are first explained.

Standard Ethernet architecture: An Ethernet architecture defined by the Institute of Electrical and Electronics Engineers (Institute of Electrical and Electronics Engineers, IEEE) 802.3 standard. A device of the standard Ethernet architecture operates in a standard Ethernet mode, which is an Ethernet operating mode defined in the IEEE 802.3 standard.

New Ethernet architecture: An improved architecture that addresses the disadvantages of the standard Ethernet architecture in low-latency scenarios. Operating modes of a device of the new Ethernet architecture include but are not limited to a new Ethernet compatible encoding mode and a new Ethernet new encoding mode. For operating processes of the new Ethernet compatible encoding mode and the new Ethernet new encoding mode, refer to the following related description, and details are not described herein.

Locking an AM code block according to a reference spacing: refers to identifying, in response to any AM code block in a data stream being identified, a next AM code block that is separated from the any AM code block by the reference spacing. Methods of identifying an AM code block include but are not limited to exact matching and fuzzy matching. For a process of identifying an AM code block, refer to the following related description, and details are not described herein.

With the development of communication technologies, for a scenario in which devices of two Ethernet architectures that have different operating modes coexist, a mode negotiation method is required, so that the devices of the two Ethernet architectures can operate in the same operating mode, implementing interconnection between the devices of the two Ethernet architectures. For example, operating modes of a device of a new Ethernet architecture include but are not limited to a new Ethernet new encoding mode, a new Ethernet compatible encoding mode, and a standard Ethernet mode, and an operating mode of a standard Ethernet device is a standard Ethernet mode. For a scenario in which devices of two new Ethernet architectures coexist, mode negotiation between the devices of the two new Ethernet architectures is required, so that the devices of the two new Ethernet architectures can operate in the same operating mode. For a scenario in which a device of a new Ethernet architecture and a device of a standard Ethernet architecture coexist, mode negotiation between the device of the new Ethernet architecture and the device of the standard Ethernet architecture is required, so that the device of the new Ethernet architecture operates in the standard Ethernet mode.

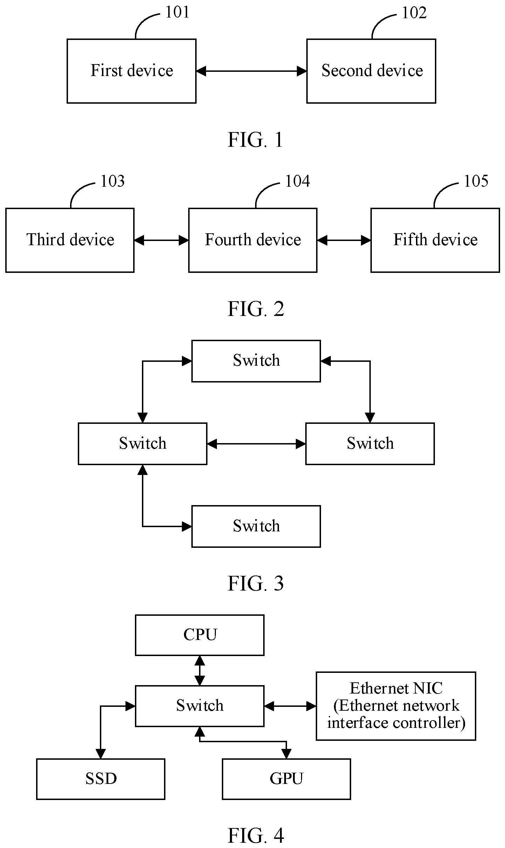

An embodiment of this application provides a mode negotiation method. The mode negotiation method may be used in a network connected based on an Ethernet technology. For example, the mode negotiation method is used in an implementation environment shown in FIG. 1. As shown in FIG. 1, the implementation environment includes a first device 101 and a second device 102, where the first device 101 and the second device 102 are communicatively connected. The first device 101 is a head end node in a network, and the second device 102 is a tail end node in the network. In the implementation environment shown in FIG. 1, the mode negotiation method provided in this embodiment of this application allows to implement mode negotiation between the first device 101 and the second device 102. For another example, the mode negotiation method is used in an implementation environment shown in FIG. 2. As shown in FIG. 2, the implementation environment includes a third device 103, a fourth device 104, and a fifth device 105, where the third device 103 and the fourth device 104 are communicatively connected, and the fourth device 104 and the fifth device 105 are communicatively connected. The third device 103 is a head end node in a network, the fourth device 104 is an intermediate node in the network, and the fifth device 105 is a tail end node in the network. The third device 103 and the fourth device 104 are adjacent nodes, and the fourth device 104 and the fifth device 105 are adjacent nodes. In the implementation environment shown in FIG. 2, the mode negotiation method provided in this embodiment of this application allows to implement mode negotiation between the third device 103 and the fourth device 104, mode negotiation between the fourth device 104 and the fifth device 105, and mode negotiation between the third device 103 and the fifth device 105.

It should be noted that the first device 101 to the fifth device 105 mentioned in embodiments of this application may be network devices such as a terminal (terminal), a server (server), a switch (switch), and a router (router), or may be other network devices having a mode negotiation requirement. Types of the first device 101 to the fifth device 105 are not limited in embodiments of this application. For example, in an implementation scenario shown in FIG. 3, the mode negotiation method provided in this embodiment of this application is used to implement mode negotiation between a plurality of switches.

For example, the foregoing devices may implement, based on an interface processing unit of the devices, the method provided in this embodiment of this application. A form of the interface processing unit is not limited in embodiments of this application. The interface processing unit may be a part of components on the network device, for example, a board, a line card, or a solid-state disk (solid state disk, SSD) on the network device, or may be a functional module on the network device, or may be a chip. For example, the chip may be a network chip such as a switching chip, a central processing unit (central processing unit, CPU), a graphics processing unit (graphics processing unit, GPU), or an Ethernet network interface controller (Ethernet network interface controller, Ethernet NIC). For example, the mode negotiation method is used in an implementation environment shown in FIG. 4. As shown in FIG. 4, interface processing units of the devices are respectively an interface processing unit of a switch, a CPU, an Ethernet NIC, an SSD, and a GPU. The switch in FIG. 4 is used to represent the interface processing unit of the switch. When the method provided in this embodiment of this application is performed by the chip, a transceiver unit configured to implement the method may be, for example, an interface circuit of the chip, and a processing unit may be a processing circuit that has a processing function in the chip. The connection between the devices and the connection between the interface processing units include but are not limited to direct connection using an Ethernet cable or an optical cable.

It may be understood that each of the foregoing implementation environments may include a plurality of devices, and device types of the devices and forms of the interface processing units of the devices may be the same or different. The numbers and types of the devices and the forms of the interface processing units that are shown in FIG. 1 to FIG. 4 are merely the numbers and types of the devices and the forms of the interface processing units that are described as examples in embodiments of this application.

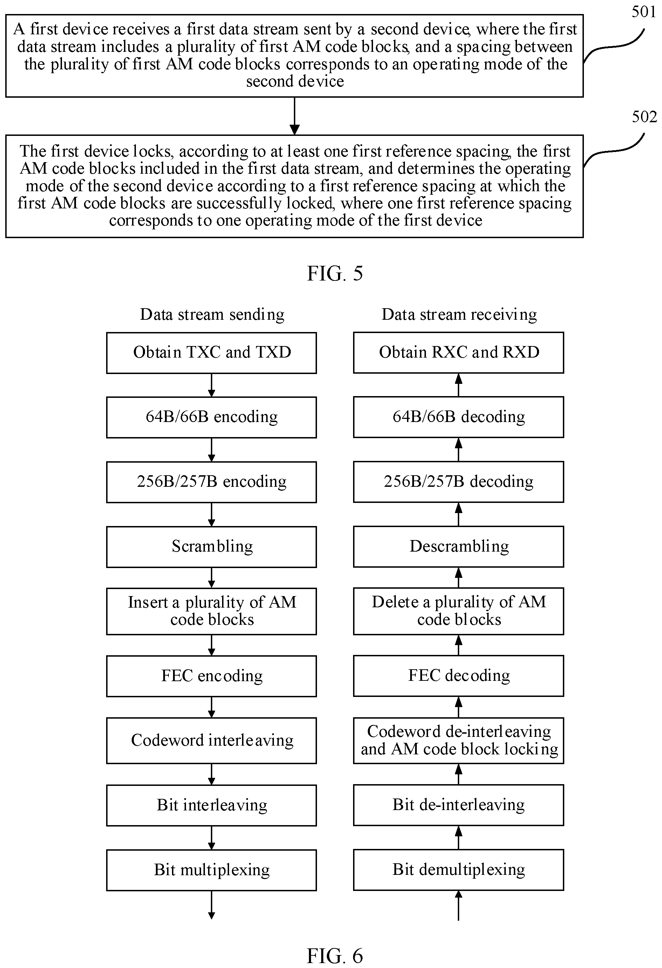

For example, the mode negotiation method provided in this embodiment of this application being applied to the implementation scenario shown in FIG. 1 is described. The mode negotiation method is shown in FIG. 5, and the method includes but is not limited to step 501 and step 502.

Step 501: A first device receives a first data stream sent by a second device, where the first data stream includes a plurality of first AM code blocks, and a spacing between the plurality of first AM code blocks corresponds to an operating mode of the second device.

For example, both the first device and the second device may support at least one operating mode, and both the first device and the second device may operate in any one of the at least one operating mode. For example, the first device is used as an example for description. If the first device is a device of a new Ethernet architecture, the operating mode supported by the first device includes but is not limited to at least one of a standard Ethernet mode, a new Ethernet compatible encoding mode, and a new Ethernet new encoding mode. The standard Ethernet mode may be a mode supported by the first device by default, that is, the first device may support the standard Ethernet mode and at least one of the new Ethernet compatible encoding mode and the new Ethernet new encoding mode. If the first device is a device of a standard Ethernet architecture, the first device supports only the standard Ethernet mode. A principle of operating mode supporting of the second device is the same as that of operating mode supporting of the first device, and details are not described herein again. For operating processes of the new Ethernet compatible encoding mode and the new Ethernet new encoding mode, refer to the following description, and details are not described herein.

In a possible implementation, regardless of an operating mode in which the first device and the second device operate, data streams sent by the first device and the second device each include a plurality of AM code blocks. For example, the operating mode corresponds to a spacing between the plurality of AM code blocks, one operating mode corresponds to one spacing, and different operating modes correspond to different spacings. Therefore, after receiving the first data stream sent by the second device, by locking, according to a spacing corresponding to each operating mode supported by the first device, the first AM code blocks included in the first data stream, the first device can determine the operating mode of the second device according to a spacing at which the first AM code blocks are successfully locked.

For example, an operating process of the first device in different operating modes is used as an example to describe the standard Ethernet mode, the new Ethernet compatible encoding mode, and the new Ethernet new encoding mode. A principle of an operating process of the second device in each operating mode is the same as that of an operating process of the first device in each operating mode. Details are not described in this embodiment of this application.

In a possible implementation, if the first device operates in the standard Ethernet mode, an operating process of the first device is shown in FIG. 6. When the first device sends a data stream to the second device, the first device performs 64-bit (bit, B)/66B encoding on a control block (transmit control, TXC) and a data block (transmit data, TXD) that are obtained based on a media access control (media access control, MAC) layer, and performs 256B/257B encoding on a plurality of obtained 66-bit code blocks, to obtain a plurality of 257-bit code blocks. The first device performs scrambling (scrambler) on the plurality of 257-bit code blocks, and inserts a plurality of AM code blocks into the plurality of scrambled 257-bit code blocks. A spacing between the plurality of AM code blocks corresponds to the standard Ethernet mode. After the insertion of the plurality of AM code blocks, the first device performs, based on the plurality of 257-bit code blocks into which the plurality of AM code blocks are inserted, operations such as forward error correction (forward error correction, FEC) encoding, codeword interleaving, bit interleaving, and bit multiplexing, and sends, to the second device, a data stream obtained after the foregoing operations are performed. Correspondingly, when the first device receives a data stream sent by the second device, the first device performs bit demultiplexing, bit de-interleaving, codeword de-interleaving, AM code block locking, and FEC decoding on the received data stream, to obtain a plurality of code blocks, where the plurality of code blocks include a plurality of AM code blocks. The first device deletes the plurality of AM code blocks from the plurality of code blocks, descrambles (descrambler) the plurality of code blocks from which the plurality of AM code blocks are deleted, to obtain a plurality of 257-bit code blocks, performs 256B/257B decoding on the plurality of 257-bit code blocks to obtain a plurality of 66-bit code blocks, performs 64B/66B decoding on the plurality of 66-bit code blocks to obtain a control block (receive control, RXC) and a data block (receive data, RXD), and transmits the RXC and the RXD to a MAC layer. Manners of AM code block insertion, FEC encoding and decoding, codeword interleaving, codeword de-interleaving, bit interleaving, bit de-interleaving, bit multiplexing, and bit demultiplexing are not limited in embodiments of this application. For a process of AM code block locking, refer to the following description, and details are not described herein.

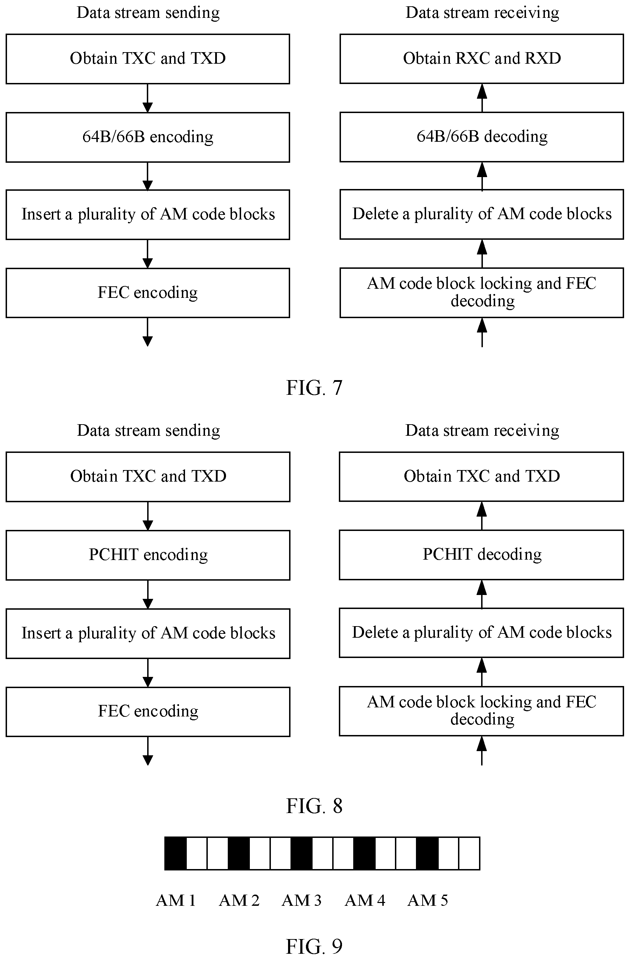

For example, if the first device operates in the new Ethernet compatible encoding mode, an operating process of the first device is shown in FIG. 7. When the first device sends a data stream to the second device, the first device performs 64B/66B encoding on TXC and TXD that are obtained based on a MAC layer, inserts a plurality of AM code blocks into an obtained code block stream, performs FEC encoding based on the code block stream into which the plurality of AM code blocks are inserted, and sends, to the second device, a data stream obtained after the FEC encoding. Correspondingly, when the first device receives a data stream sent by the second device, the first device performs AM code block locking and FEC decoding on the received data stream, to obtain a plurality of code blocks, where the plurality of code blocks include a plurality of AM code blocks. The first device deletes the plurality of AM code blocks from the plurality of code blocks, performs 64B/66B decoding based on the plurality of code blocks from which the plurality of AM code blocks are deleted, to obtain RXC and RXD, and transmits the RXC and the RXD to a MAC layer. Manners of AM code block insertion and FEC encoding and decoding are not limited in embodiments of this application.

For example, if the first device operates in the new Ethernet new encoding mode, an operating process of the first device is shown in FIG. 8. When the first device sends a data stream to the second device, the first device obtains TXC and TXD, and performs physical check unit (physical check unit, PCHIT) encoding on the TXC and the TXD. The first device inserts a plurality of AM code blocks into a code block stream obtained based on PCHIT encoding, where a spacing between the plurality of AM code blocks corresponds to the new Ethernet new encoding mode. The first device performs FEC encoding on the code block stream into which the plurality of AM code blocks are inserted, and sends, to the second device, a data stream after the FEC encoding. Correspondingly, when the first device receives a data stream sent by the second device, the first device performs AM code block locking and FEC decoding on the received data stream, to obtain a plurality of code blocks, where the plurality of code blocks include a plurality of AM code blocks. The first device deletes the plurality of AM code blocks from the plurality of code blocks, and performs PCHIT decoding based on the plurality of code blocks from which the plurality of AM code blocks are deleted, to obtain RXC and RXD. Manners of AM code block insertion and FEC encoding and decoding are not limited in this application.

It can be learned from the foregoing content that, for all of the standard Ethernet mode, the new Ethernet compatible encoding mode, and the new Ethernet new encoding mode, the first device performs the operation of AM code block locking after receiving the data stream sent by the second device.

Step 502: The first device locks, according to at least one first reference spacing, the first AM code blocks included in the first data stream, and determines the operating mode of the second device according to a first reference spacing at which the first AM code blocks are successfully locked, where one first reference spacing corresponds to one operating mode of the first device.

For example, each first reference spacing is a spacing between a plurality of AM code blocks in a data stream sent by the first device when the first device operates in each operating mode supported by the first device. For example, if the first device supports the standard Ethernet mode, the new Ethernet compatible encoding mode, and the new Ethernet new encoding mode, the at least one first reference spacing includes: (1) a spacing between a plurality of AM code blocks in a data stream sent by the first device when the first device operates in the standard Ethernet mode; (2) a spacing between a plurality of AM code blocks in a data stream sent by the first device when the first device operates in the new Ethernet compatible encoding mode; or (3) a spacing between a plurality of AM code blocks in a data stream sent by the first device when the first device operates in the new Ethernet new encoding mode.

In a possible implementation, that the first device locks, according to at least one first reference spacing, the first AM code blocks included in the first data stream includes: the first device performs a blind search on the first AM code blocks in the first data stream; and in response to finding any first AM code block in the first data stream through the blind search, identifies a next first AM code block according to the at least one first reference spacing. A manner of the blind search on the first AM code blocks is not limited in embodiments of this application. For example, the first device matches a format of the code blocks in the first data stream with a reference code block format, and in response to a format of any one of the code blocks successfully matching the reference code block format, determines that the any code block is the first AM code block found through blind search. A manner of matching the format of any code block with the reference code block format includes but is not limited to exact matching and fuzzy matching. Algorithms used for exact matching and fuzzy matching are not limited in embodiments of this application. For example, regardless of an operating mode in which the first device and the second device operate, formats of AM code blocks in data streams sent by the first device and the second device are the same. The reference code block format is an AM code block format used when the first device performs AM code block insertion. When the reference code block format is the same as the format of the first AM code block in the first data stream, the first device can find the first AM code block through blind search by determining whether the format of the code blocks in the first data stream is the same as the reference code block format.

For example, identifying a next first AM code block according to the at least one first reference spacing includes: for any one of the at least one first reference spacing, identifying, according to the any reference spacing, a next first AM code block of the first AM code block found through the blind search. For example, it is identified whether a code block whose distance from the first AM code block found through the blind search is the any reference spacing is the first AM code block. A manner of identifying whether a code block whose distance from the first AM code block found through the blind search is the any reference spacing is the first AM code block is not limited in embodiments of this application. For example, it is determined whether a format of the code block is the same as a format of the first AM code block. If the format of the code block is the same as the format of the first AM code block, the code block is the first AM code block. If the format of the code block is different from the format of the first AM code block, the code block is not the first AM code block.

A sequence of identifying a next first AM code block according to the first reference spacings is not limited in embodiments of this application either. Operations of identifying a next first AM code block according to the first reference spacings may be performed in parallel or in serial.

For example, the first device includes a plurality of identification modules, one of which is configured to identify a next first AM code block according to one first reference spacing, so that the first device can identify the next first AM code block according to the first reference spacings in parallel by using the identification modules. The identification operation is performed in parallel, so that efficiency of identifying the next first AM code block is relatively high.

For another example, the first device first identifies a next first AM code block according to one of the at least one first reference spacing, and in response to the next first AM code block being not identified according to the first reference spacing, identifies the next first AM code block according to another of the at least one first reference spacing.

For example, for any one of the at least one first reference spacing, in response to the next first AM code block being identified according to the any first reference spacing, the first device successfully locks, according to the any first reference spacing, the first AM code blocks included in the first data stream, where the any first reference spacing is a first reference spacing at which the first AM code blocks are successfully locked. In response to the next first AM code block being not identified according to the any first reference spacing, the first device fails to lock, according to the any first reference spacing, the first AM code blocks included in the first data stream, where the any first reference spacing is a first reference spacing at which the first AM code blocks fail to be locked.

In a possible implementation, in the case of serial identification of the next first AM code block according to the first reference spacings, after the next first AM code block is identified according to a first reference spacing, the first device may use the first reference spacing as a first reference spacing at which the first AM code blocks are successfully locked, and may no longer perform an operation of identifying a next first AM code block according to another first reference spacing, or may continue to perform an operation of identifying a next first AM code block according to another first reference spacing, until operations of identifying a next first AM code block according to all of the first reference distances are completed. Compared with the manner of performing the identification operation in parallel, when performing the identification operation in serial, the first device identifies a next first AM code block according to only one first reference spacing at a time, and therefore, a small amount of device resources are required for performing the identification operation.

In a possible implementation, there are one or more first reference spacings at which the first AM code blocks are successfully locked. For example, the first data stream is shown in FIG. 9, where code blocks in black are the first AM code blocks. For ease of description, the first AM code blocks are referred to as an AM 1, an AM 2, ..., and an AM 5, respectively. After identifying the AM 1, the first device identifies the AM 2, the AM 3, the AM 4, and the AM 5 according to a first reference spacing, and identifies the AM 3 and the AM 5 according to another first reference spacing. In this case, both of the first reference spacings are first reference spacings at which the first AM code blocks are successfully locked. For example, when there is only one first reference spacing at which the first AM code blocks are successfully locked, the first device determines an operating mode corresponding to the first reference spacing as the operating mode of the second device. When there are a plurality of first reference spacings at which the first AM code blocks are successfully locked, that the first device determines the operating mode of the second device according to a first reference spacing at which the first AM code blocks are successfully locked includes but is not limited to Manner 1 and Manner 2.

Manner 1: The first device determines, from operating modes corresponding to the plurality of first reference spacings at which the first AM code blocks are successfully locked, an operating mode with a highest priority as the operating mode of the second device.

For example, the operating modes have respective priorities. For example, according to a descending order of priorities, the operating modes are sorted as the new Ethernet compatible encoding mode, the new Ethernet new encoding mode, and the standard Ethernet mode. Therefore, when there are the plurality of first reference spacings at which the first AM code blocks are successfully locked, the first device may determine, from the operating modes corresponding to the plurality of first reference spacings, the operating mode with the highest priority as the operating mode of the second device.

Manner 2: The first device determines, as the operating mode of the second device, an operating mode corresponding to a smallest first reference spacing among the plurality of first reference spacings at which the first AM code blocks are successfully locked.

For example, the operating modes correspond to different first reference spacings. Therefore, when there are the plurality of first reference spacings at which the first AM code blocks are successfully locked, the first device may determine the operating mode corresponding to the smallest first reference spacing among the plurality of first reference spacings as the operating mode of the second device. For example, based on the first data stream shown in FIG. 9, there are two first reference spacings at which the first AM code blocks are successfully locked, in which case the first device may determine an operating mode corresponding to a smaller one of the two first reference spacings as the operating mode of the second device. When there are the plurality of first reference spacings at which the first AM code blocks are successfully locked, a manner of determining the operating mode of the second device in this method provided in this embodiment of this application is relatively flexible.

In a possible implementation, after the determining the operating mode of the second device according to a first reference spacing at which the first AM code blocks are successfully locked, the method further includes: the first device operates in the operating mode of the second device.

For example, that the first device operates in the operating mode of the second device includes: the first device sends a second data stream to the second device, where the second data stream includes a plurality of second AM code blocks, and a spacing between the plurality of second AM code blocks is the same as the spacing between the plurality of first AM code blocks.

In a possible implementation, the first device operates in an initial operating mode before operating in the operating mode of the second device. The initial operating mode may be the operating mode with the highest priority in the at least one operating mode of the first device. If the initial operating mode is the same as the operating mode of the second device, that the first device operates in the operating mode of the second device means that the first device operates in the initial operating mode. If the initial operating mode is different from the operating mode of the second device, that the first device operates in the operating mode of the second device includes: the first device switches from operating in the initial operating mode to operating in the operating mode of the second device. A switching occasion at which the first device switches from operating in the initial operating mode to operating in the operating mode of the second device is not limited in embodiments of this application. For example, after determining the operating mode of the second device, the first device switches, at a boundary of a next AM code block to be sent, to operating in the operating mode of the second device. After the operating mode of the second device is determined, switching to operating in the operating mode of the second device is performed at the boundary of the next AM code block to be sent, so that in addition to switching to operating in the operating mode of the second device as early as possible, it can be ensured that transmission of a data block between the AM code blocks is not affected by the mode switching operation, and data transmission reliability is ensured.

**In** a possible implementation, the initial operating mode is the operating mode with the highest priority in the at least one operating mode of the first device. **In** another possible implementation, the first reference spacing corresponding to the initial operating mode is the smallest value of the first reference spacing corresponding to the at least one operating mode of the first device.

**In** a possible implementation, the method further includes: the first device receives a third data stream sent by the second device, where the third data stream includes a plurality of third AM code blocks, and a spacing between the plurality of third AM code blocks corresponds to the operating mode of the second device; and the first device locks, according to the at least one first reference spacing, the third AM code blocks included in the third data stream, and in response to a failure in locking the third AM code blocks included in the third data stream, the first device operates in a target operating mode from the at least one operating mode of the first device.

For example, that the first device operates in a target operating mode from the at least one operating mode of the first device includes: the first device sends a fourth data stream to the second device, where the fourth data stream includes a plurality of fourth AM code blocks, and a spacing between the plurality of fourth AM code blocks corresponds to the target operating mode.

For example, when receiving the third data stream sent by the second device, the first device has not performed mode negotiation with the second device, that is, the first device has not determined the operating mode of the second device. **In** response to a failure of the first device in locking the third AM code blocks included in the third data stream, the first device may operate in the target operating mode from the at least one operating mode of the first device. The target operating mode may be the standard Ethernet mode. That is, when the first device fails to lock the third AM code blocks included in the third data stream, the first device may operate in the standard Ethernet mode. Because both the first device and the second device can support the standard Ethernet mode, after receiving the fourth data stream sent by the first device, the second device can determine that the operating mode of the first device is the standard Ethernet mode, and then operate in the standard Ethernet mode, so that the first device and the second device can operate in the same operating mode.

For example, before receiving the third data stream sent by the second device, the first device has performed mode negotiation with the second device, that is, the first device has determined the operating mode of the second device, and the first device may operate in the operating mode of the second device. Because the third data stream may be subject to interference in a transmission process, a bit error rate of the third data stream increases, and the first device may fail to lock, according to the at least one first reference spacing, the third AM code blocks included in the third data stream. In this case, the target operating mode may be the operating mode with the highest priority in the at least one operating mode of the first device, or the operating mode corresponding to the smallest one of the first reference spacing corresponding to the at least one operating mode. For example, the target operating mode is the same as the initial operating mode. In other words, when the first device fails to lock the third AM code blocks included in the third data stream, the first device may operate in the initial operating mode, to perform mode negotiation with the second device again. Because the second device may be subject to interference during operation, the operating mode of the second device changes, and the first device may fail to lock, according to the at least one reference spacing, the third AM code blocks included in the third data stream. In this case, the target operating mode may also be the operating mode with the highest priority in the at least one operating mode of the first device, or the operating mode corresponding to the smallest one of the first reference spacing corresponding to the at least one operating mode. For example, the target operating mode is the same as the initial operating mode, and the first device operates in the initial operating mode to perform mode negotiation with the second device again.

In a possible implementation, if the first device has performed mode negotiation with the second device, when locking, according to the at least one first reference spacing, the third AM code blocks included in the third data stream, the first device may lock, according to the spacing between the plurality of first AM code blocks, the third AM code blocks included in the third data stream. When the operating mode of the second device does not change, there is a relatively high probability that the third AM code blocks included in the third data stream are successfully locked according to the spacing between the plurality of first AM code blocks. In this way, efficiency of locking the third AM code blocks included in the third data stream until the locking succeeds can be improved, and device resources required for performing the process of AM code block locking can be reduced. For example, when the third AM code blocks included in the third data stream are successfully locked, the first device performs a subsequent data processing process, for example, FEC decoding, to establish a data transmission path between the first device and the second device.

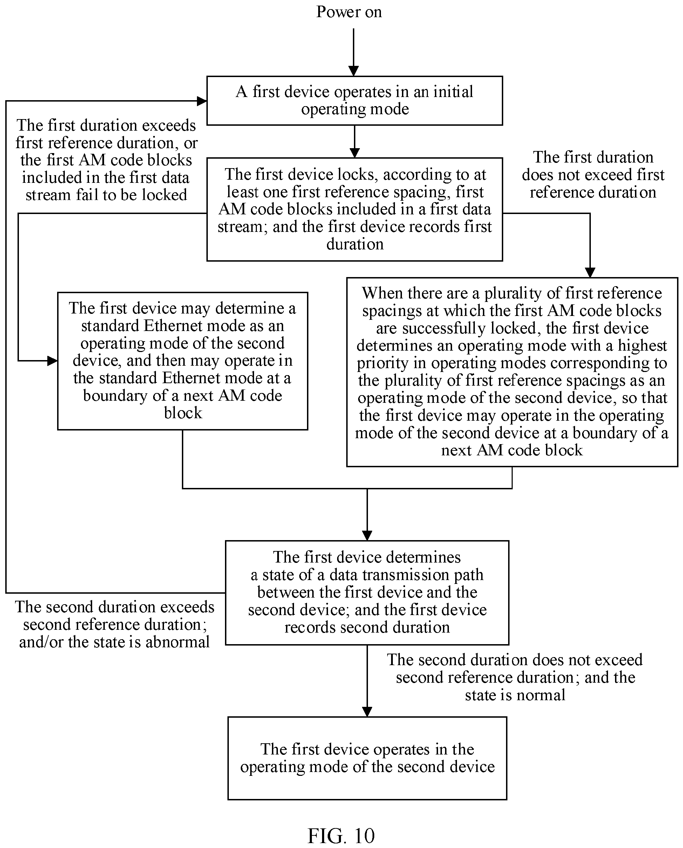

FIG. 10 is a diagram of a process of performing a mode negotiation method by a first device according to an embodiment of this application. As shown in FIG. 10, after being powered on, the first device operates in an initial operating mode, where the initial operating mode is an operating mode with a highest priority in at least one operating mode of the first device. The first device receives a first data stream sent by a second device, where the first data stream includes a plurality of first AM code blocks, and a spacing between the plurality of first AM code blocks corresponds to an operating mode of the second device. The first device locks, according to at least one first reference spacing, the first AM code blocks included in the first data stream, and determines the operating mode of the second device according to a first reference spacing at which the first AM code blocks are successfully locked.

For example, the first device further records first duration in which the first device locks, according to the at least one first reference spacing, the first AM code blocks included in the first data stream. In response to the first duration not exceeding first reference duration, when there are a plurality of first reference spacings at which the first AM code blocks are successfully locked, the first device determines an operating mode with a highest priority in operating modes corresponding to the plurality of first reference spacings as the operating mode of the second device, so that the first device may operate in the operating mode of the second device at a boundary of a next AM code block. Certainly, if the first duration does not exceed the first reference duration, and there is only one first reference spacing at which the first AM code blocks are successfully locked, the first device may determine an operating mode corresponding to the first reference spacing as the operating mode of the second device. The case in which there is only one first reference spacing at which the first AM code blocks are successfully locked is not shown in FIG. 10. In response to the first duration exceeding the first reference duration or a failure in locking the first AM code blocks included in the first data stream, the first device operates in a standard Ethernet mode. Because the standard Ethernet mode may be an operating mode supported by the first device and the second device by default, when the first duration exceeds the first reference duration or the first AM code blocks included in the first data stream fail to be locked, the first device may determine the standard Ethernet mode as the operating mode of the second device, so that the first device may operate in the standard Ethernet mode at the boundary of the next AM code block. The first reference duration may be set based on experience or actual requirements. This is not limited in embodiments of this application.

For example, after operating in the operating mode of the second device, the first device determines a state of a data transmission path between the first device and the second device. For example, the first device receives a third data stream sent by the second device, and locks, according to the at least one first reference spacing, third AM code blocks included in the third data stream, to determine the state of the data transmission path between the first device and the second device. In response to a success in locking the third AM code blocks included in the third data stream, the first device determines that the state of the data transmission path between the first device and the second device is normal, and the first device operates in the operating mode of the second device. In response to a failure in locking the third AM code blocks included in the third data stream, the first device determines that the state of the data transmission path between the first device and the second device is abnormal, and the first device operates in a target operating mode, where the target operating mode may be the initial operating mode.

For example, in response to the first device operating in the operating mode of the second device, the first device records second duration from operating in the operating mode of the second device to successfully locking the third AM code blocks included in the third data stream. In a possible implementation, the first device still operates in the operating mode of the second device in response to the second duration not exceeding second reference duration; and the first device operates in the target operating mode in response to the second duration exceeding the second reference duration, where the target operating mode may be the initial operating mode. For example, the second reference duration may be determined based on experience or actual requirements. For example, the second reference duration may be duration that is determined based on experience and that is from the first device operating in the operating mode of the second device to successfully locking the third AM code blocks included in the third data stream. If the second duration exceeds the second reference duration, the first device determines that the process of establishing the data transmission path is abnormal, and the first device may operate in the initial operating mode, to perform mode negotiation with the second device again.

In the method provided in this embodiment of this application, the spacing between the plurality of AM code blocks corresponds to the operating mode, and by locking the first AM code blocks in the first data stream according to the at least one first reference spacing, the first device can determine the operating mode of the second device according to the first reference spacing at which the first AM code blocks are successfully locked. The mode negotiation method is simple and efficient. In addition, because the operating mode of the second device corresponds to the spacing between the plurality of first AM code blocks, the second device does not need to transmit operating mode information other than the AM code blocks to the first device. In the method provided in this embodiment of this application, a manner of transmitting the operating mode information is simpler, and mode negotiation overheads are relatively low. In addition, the method provided in this embodiment of this application is applicable to both a device having an electrical interface and a device having an optical interface, providing a relatively wide scope of application.

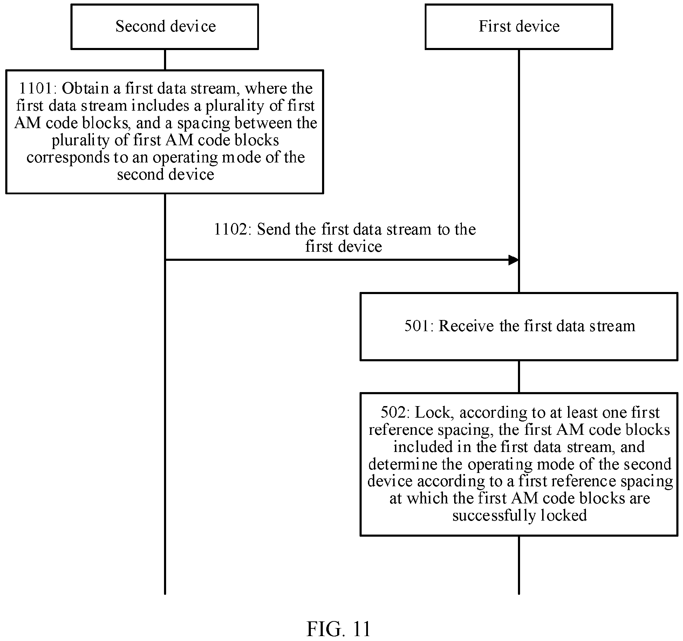

The foregoing description is the process of mode negotiation performed on the first device side. The following uses the second device side as an example to describe a mode negotiation method provided in an embodiment of this application. FIG. 11 is a flowchart of performing the mode negotiation method on the second device side. As shown in FIG. 11, the method includes but is not limited to step 1101 and step 1102.

Step 1101: A second device obtains a first data stream, where the first data stream includes a plurality of first AM code blocks, and a spacing between the plurality of first AM code blocks corresponds to an operating mode of the second device.

A manner of obtaining the first data stream by the second device is not limited in embodiments of this application. For example, before the second device obtains the first data stream, the method further includes: the second device receives a fifth data stream sent by the first device, where the fifth data stream includes a plurality of fifth AM code blocks, and a spacing between the plurality of fifth AM code blocks corresponds to an initial operating mode of the first device; and the second device locks, according to at least one second reference spacing, the fifth AM code blocks included in the fifth data stream, and in response to a failure in locking the fifth AM code blocks included in the fifth data stream, the second device obtains the first data stream, where one second reference spacing corresponds to one operating mode of the second device. A principle of locking, by the second device according to the at least one second reference spacing, the fifth AM code blocks included in the fifth data stream is the same as that of locking, by the first device according to the at least one first reference spacing, the first AM code blocks included in the first data stream in step 502. Details are not described herein again.

For example, an operating mode corresponding to the spacing between the plurality of first AM code blocks is an operating mode with a highest priority in the at least one operating mode of the second device. In another possible implementation, the spacing between the plurality of first AM code blocks is a smallest value of the second reference spacing corresponding to the at least one operating mode of the second device. In other words, the operating mode corresponding to the spacing between the plurality of first AM code blocks is an operating mode corresponding to the smallest one of the at least one second reference spacing. The spacing between the plurality of first AM code blocks is not limited in embodiments of this application, and the spacing between the plurality of first AM code blocks is relatively flexible.

Step 1102: The second device sends the first data stream to the first device.

In a possible implementation, the second device receives a fourth data stream, where the fourth data stream includes a plurality of fourth AM code blocks, and a spacing between the plurality of fourth AM code blocks corresponds to an operating mode of the first device. The second device locks, according to at least one second reference spacing, the fourth AM code blocks included in the fourth data stream, and in response to a failure in locking the fourth AM code blocks included in the fourth data stream, performs the operations of obtaining the first data stream and sending the first data stream to the first device. **In** this way, upon receiving the first data stream, the first device can perform mode negotiation with the second device again based on the first data stream.

**In** a possible implementation, after the second device receives the fourth data stream, the method further includes: in response to a success in locking the fourth AM code blocks included in the fourth data stream, determining the operating mode of the first device according to a second reference spacing at which the fourth AM code blocks are successfully locked, and operating in the operating mode of the first device.

In the method provided in this embodiment of this application, the spacing between the plurality of AM code blocks corresponds to the operating mode, and the second device sends the first data stream including the plurality of first AM code blocks to the first device, so that the first device can determine the operating mode of the second device. The mode negotiation method is simple and efficient. In addition, because the operating mode of the second device can be determined based on the first reference spacing at which the first AM code blocks are successfully locked, the second device does not need to transmit operating mode information other than the AM code blocks to the first device. In the method provided in this embodiment of this application, a manner of transmitting the operating mode information is simpler, and mode negotiation overheads are relatively low. In addition, the method provided in this embodiment of this application is applicable to both a device having an electrical interface and a device having an optical interface, providing a relatively wide scope of application.

The following describes the mode negotiation method provided in embodiments of this application by using examples of the following three scenarios.

Scenario 1: The first device supports the new Ethernet compatible encoding mode and the standard Ethernet mode, and the second device supports the standard Ethernet mode.

In a possible implementation, the first device and the second device are devices with the same transmission rate. For example, both the first device and the second device are devices of the 400 gigabit Ethernet (gigabit Ethernet, GE), that is, transmission rates of the first device and the second device are 400 gigabits per second (gigabits per second, Gbps). For devices with different transmission rates, priorities of the standard Ethernet mode, the new Ethernet compatible encoding mode, and the new Ethernet new encoding mode, and a spacing between a plurality of AM code blocks in each of the operating modes are shown in Table 1.

**Table 1**

| Transmission rate (Gbps) | Operating mode | Priority | Number of bits/lanes between AM code blocks | Number of lanes | Number of codewords between AM code blocks |
|---|---|---|---|---|---|
| 200 | New Ethernet compatible encoding mode | High | 4,264,960 | 4 | 3,136×RS(544, 514, 15, 10) 1,792×RS(952, 924, 14, 10) |
| | New Ethernet new encoding mode | Medium | 2,949,120 | 8 | 40,960×RS(72, 68, 2, 8) 20,480×RS(144, 136, 4, 8) 8,192×RS(288, 272, 8, 10) 4,096×RS(576, 544, 16, 10) |
| | Standard Ethernet mode | Low | 2,785,280 | 8 | 4,096×RS(544, 514, 16, 10) |
| 400 | New Ethernet compatible encoding mode | High | 4,264,960 | 8 | 6,272×RS(544, 514, 15, 10) 3,584×RS(952, 924, 14, 10) |
| | New Ethernet new encoding mode | Medium | 2,949,120 | 16 | 81,920×RS(72, 68, 2, 8) 40,960×RS(144, 136, 4, 8) 16,384×RS(288, 272, 8, 10) 8,192×RS(576, 544, 16, 10) |
| | Standard Ethernet mode | Low | 2,785,280 | 16 | 8,192×RS(544, 514, 16, 10) |

In a possible implementation, both the first device and the second device may receive and send a data stream over at least one lane (lane). During receiving and sending of data streams over a plurality of lanes, a device that receives the data streams may separately perform AM code block locking for the data streams received over the lanes. For example, a spacing between AM code blocks in the data stream is represented by the number of bits. In the data streams received over the lanes, the number of bits between the AM code blocks is determined based on the number of lanes and the number of codewords between the AM code blocks. For example, the codewords may be FEC codewords, and one FEC codeword is represented as one code block. An FEC encoding mode is not limited in embodiments of this application. For example, as shown in Table 1, the FEC codeword is a codeword obtained through Reed-Solomon (Reed-Solomon, RS) encoding.

A representation of a codeword obtained through RS encoding is RS(k, t, m, s), where RS() represents that an encoding mode of the codeword is RS encoding, k represents the number of symbols (symbols) included in the codeword, t represents the number of symbols corresponding to data in the codeword before encoding, m represents the number of symbols corresponding to check data in the codeword, and s represents the number of bits included in each symbol. For example, RS(544, 514, 15, 10) represents a codeword obtained through RS encoding, and the codeword includes 544 symbols, where 514 symbols correspond to data before encoding, 15 symbols correspond to check data, and each symbol includes 10 bits.

For example, a relationship between the number of bits/lanes between the AM code blocks, the number of lanes, and the number of codewords between the AM code blocks shown in Table 1 is: Number of bits between the AM code blocks/lanes * Number of lanes = Number of codewords between the AM code blocks * Number of bits per codeword. For example, when the transmission rate is 200 Gbps and the operating mode is the new Ethernet compatible encoding mode, there is 4,264,960 * 4 = 3,136 * 544 * 10. That is, for a device with a transmission rate of 200 Gbps whose operating mode is the new Ethernet compatible encoding mode, a spacing between AM code blocks in a data stream sent by the device is 4,264,960 bits. A principle of other cases in Table 1 is the same as that of the foregoing case, and details are not described herein again.

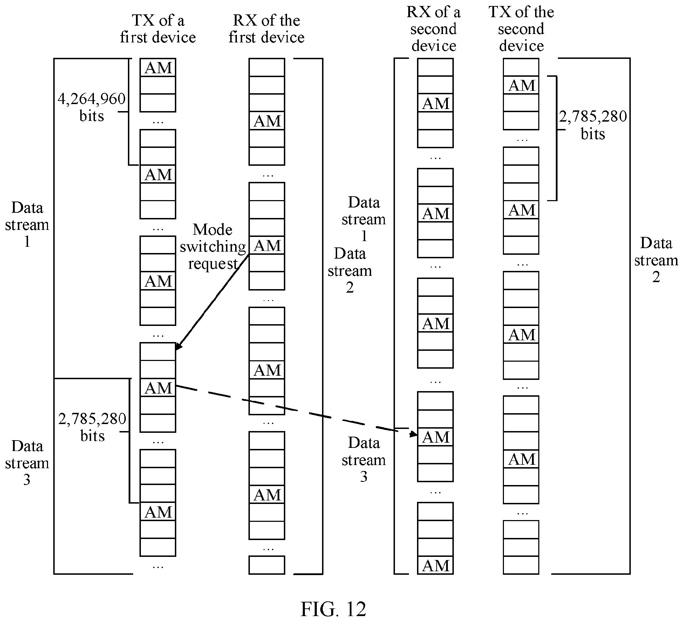

The transmission rates of the first device and the second device are not limited in embodiments of this application. For example, the first device and the second device may be the devices with various transmission rates shown in Table 1, or may be devices with other transmission rates that are not shown in Table 1. For example, the first device and the second device are 50GE devices or 100GE devices. In this embodiment of this application, only an example in which both the first device and the second device are 400GE devices is used for description. When the first device and the second device are devices with other transmission rates, a principle of a mode negotiation process between the first device and the second device is the same. Details are not described in this embodiment of this application. For example, a mode negotiation process between the first device and the second device is shown in FIG. 12. For ease of description, FIG. 12 shows only data streams received and sent over one lane. An initial operating mode of the first device is the new Ethernet compatible encoding mode. A transmit end (transmit, TX) of the first device sends a data stream 1 to the second device, where the data stream 1 includes a plurality of first AM code blocks, and a spacing between the plurality of first AM code blocks is used to indicate that the operating mode of the first device is the new Ethernet compatible encoding mode. With reference to the content of Table 1, the spacing between the plurality of first AM code blocks is 4,264,960 bits. A receive end (receiver, RX) of the second device receives the data stream 1, and locks, according to a 2,785,280-bit spacing corresponding to the standard Ethernet mode, the first AM code blocks included in the data stream 1. In response to a failure in locking the first AM code blocks included in the data stream 1, the TX of the second device sends a data stream 2 to the first device, where the data stream 2 includes a plurality of second AM code blocks, and a spacing between the plurality of second AM code blocks is 2,785,280 bits.

The RX of the first device receives the data stream 2, and locks the second AM code blocks included in the data stream 2 according to a 4,264,960-bit spacing corresponding to the new Ethernet compatible encoding mode and a 2,785,280-bit spacing corresponding to the standard Ethernet mode. The RX of the first device successfully locks, according to the 2,785,280-bit spacing, the second AM code blocks included in the data stream 2, and determines the standard Ethernet mode corresponding to the 2,785,280 bits as the operating mode of the second device. The first device switches to operating in the standard Ethernet mode at a boundary of a next AM code block. For example, as shown in FIG. 12, the RX of the first device sends a mode switching request to the TX of the first device, so that after receiving the mode switching request, the TX of the first device sends a data stream 3 at the boundary of the next AM code block according to a spacing of 2,785,280 bits between the plurality of AM code blocks. In the scenario shown in FIG. 12, the second device keeps operating in the standard Ethernet mode.

Scenario 2: The first device supports the new Ethernet new encoding mode, the new Ethernet compatible encoding mode, and the standard Ethernet mode, and the second device supports the new Ethernet new encoding mode and the standard Ethernet mode.

For example, in this scenario, for devices with different transmission rates, priorities of the standard Ethernet mode, the new Ethernet compatible encoding mode, and the new Ethernet new encoding mode, and a spacing between a plurality of AM code blocks in each of the operating modes are the same as those shown in Table 1, and details are not described herein again.

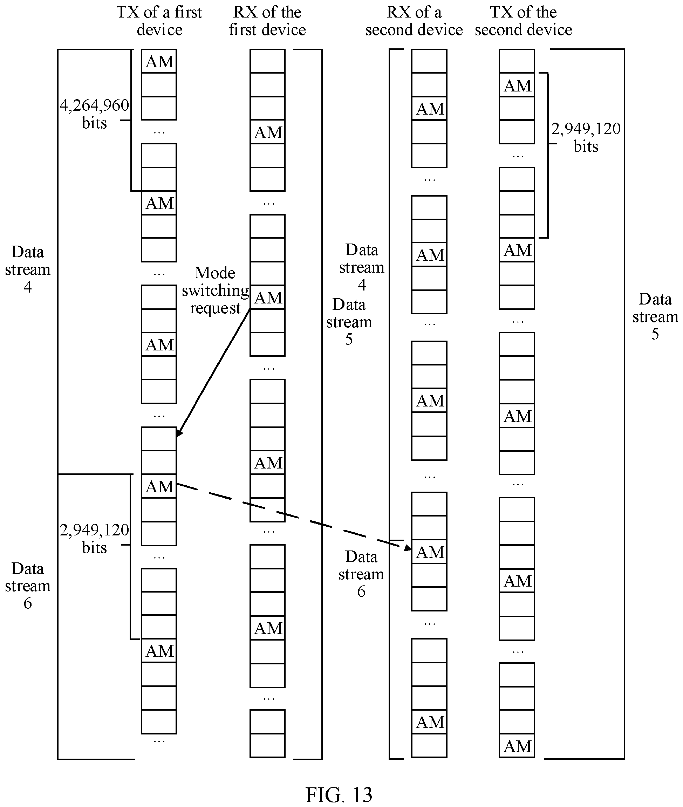

In a possible implementation, both the first device and the second device are 400GE devices. When the first device and the second device are devices with other transmission rates, a principle of a mode negotiation process between the first device and the second device is the same. Details are not described in this embodiment of this application. A mode negotiation process between the first device and the second device is shown in FIG. 13. For ease of description, FIG. 13 shows only data streams received and sent over one lane. An initial operating mode of the first device is the new Ethernet compatible encoding mode. The TX of the first device sends a data stream 4 to the second device, where the data stream 4 includes a plurality of first AM code blocks, and a spacing between the plurality of first AM code blocks is used to indicate that the operating mode of the first device is the new Ethernet compatible encoding mode. With reference to the content of Table 1, the spacing between the plurality of first AM code blocks is 4,264,960 bits. The RX of the second device receives the data stream 4, and locks the first AM code blocks included in the data stream 4 according to a 2,949,120-bit spacing corresponding to the new Ethernet new encoding mode and a 2,785,280-bit spacing corresponding to the standard Ethernet mode. In response to a failure in locking the first AM code blocks included in the data stream 4, the TX of the second device sends a data stream 5 to the first device, where the data stream 5 includes a plurality of second AM code blocks, and a spacing between the plurality of second AM code blocks is 2,949,120 bits.

The RX of the first device receives the data stream 5, and locks the second AM code blocks included in the data stream 5 according to a 4,264,960-bit spacing corresponding to the new Ethernet compatible encoding mode, a 2,949,120-bit spacing corresponding to the new Ethernet new encoding mode, and a 2,785,280-bit spacing corresponding to the standard Ethernet mode. The RX of the first device successfully locks, according to the 2,949,120-bit spacing, the second AM code blocks included in the data stream 5, and determines the new Ethernet new encoding mode corresponding to the 2,949,120 bits as the operating mode of the second device. The first device switches to operating in the new Ethernet new encoding mode at a boundary of a next AM code block. For example, as shown in FIG. 13, the RX of the first device sends a mode switching request to the TX of the first device, so that after receiving the mode switching request, the TX of the first device sends a data stream 6 at the boundary of the next AM code block according to a spacing of 2,949,120 bits between the plurality of AM code blocks.

For example, in the scenario shown in FIG. 13, when the first device operates in the new Ethernet new encoding mode, after receiving the data stream 6 sent by the first device, the second device locks AM code blocks included in the data stream 6 according to the 2,949,120-bit spacing corresponding to the new Ethernet new encoding mode and the 2,785,280-bit spacing corresponding to the standard Ethernet mode. Because the data stream 6 is a data stream sent by the first device when the first device operates in the new Ethernet new encoding mode, the second device can successfully lock, according to the 2,949,120-bit spacing corresponding to the new Ethernet new encoding mode, the AM code blocks included in the data stream 6. The second device keeps operating in the new Ethernet new encoding mode.

Scenario 3: The first device supports the new Ethernet compatible encoding mode and the standard Ethernet mode, and the second device supports the new Ethernet new encoding mode and the standard Ethernet mode.

For example, in this scenario, for devices with different transmission rates, priorities of the standard Ethernet mode, the new Ethernet compatible encoding mode, and the new Ethernet new encoding mode, and a spacing between a plurality of AM code blocks in each of the operating modes are the same as those shown in Table 1, and details are not described herein again.

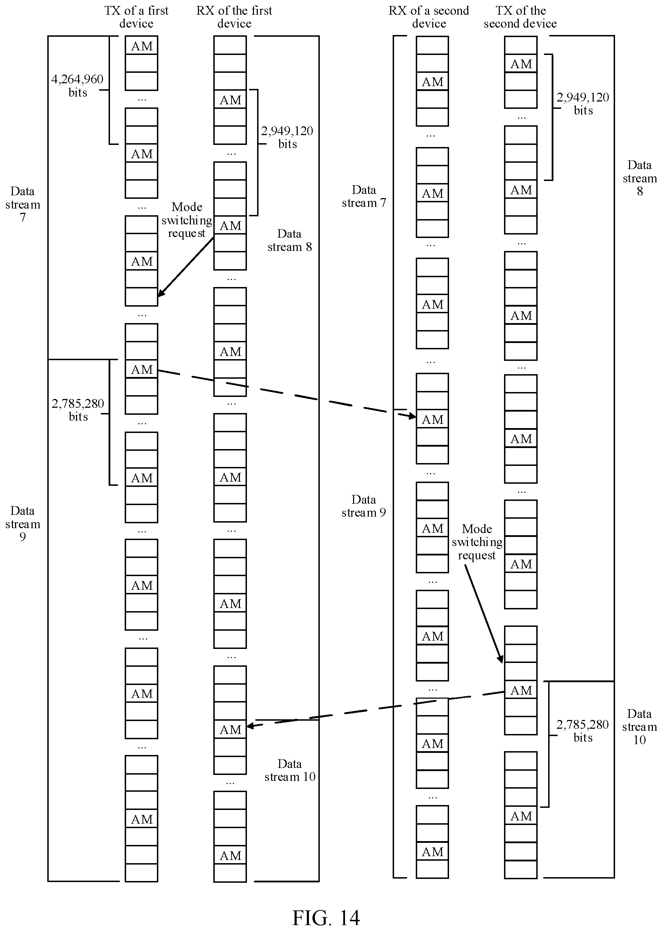

In a possible implementation, both the first device and the second device are 400GE devices. When the first device and the second device are devices with other transmission rates, a principle of a mode negotiation process between the first device and the second device is the same. Details are not described in this embodiment of this application. A mode negotiation process between the first device and the second device is shown in FIG. 14. For ease of description, FIG. 14 shows only data streams received and sent over one lane. An initial operating mode of the first device is the new Ethernet compatible encoding mode. The TX of the first device sends a data stream 7 to the second device, where the data stream 7 includes a plurality of first AM code blocks, and a spacing between the plurality of first AM code blocks is used to indicate that the operating mode of the first device is the new Ethernet compatible encoding mode. With reference to the content of Table 1, the spacing between the plurality of first AM code blocks is 4,264,960 bits. The RX of the second device receives the data stream 7, and locks the first AM code blocks included in the data stream 7 according to a 2,949,120-bit spacing corresponding to the new Ethernet new encoding mode and a 2,785,280-bit spacing corresponding to the standard Ethernet mode. The second device fails to lock the first AM code blocks included in the data stream 7, and the TX of the second device sends a data stream 8 to the first device, where the data stream 8 includes a plurality of second AM code blocks, and a spacing between the plurality of second AM code blocks is 2,949,120 bits.

The RX of the first device receives the data stream 8, and locks the second AM code blocks included in the data stream 8 according to a 4,264,960-bit spacing corresponding to the new Ethernet compatible encoding mode and a 2,785,280-bit spacing corresponding to the standard Ethernet mode. In response to a failure of the RX of the first device in locking the second AM code blocks included in the data stream 8, the first device operates in the standard Ethernet mode. For example, as shown in FIG. 14, the RX of the first device sends a mode switching request to the TX of the first device, so that after receiving the mode switching request, the TX of the first device sends a data stream 9 at the boundary of the next AM code block according to a spacing of 2,785,280 bits between the plurality of AM code blocks.

For example, in the scenario shown in FIG. 14, when the first device operates in the standard Ethernet mode, after receiving the data stream 9 sent by the first device, the RX of the second device locks AM code blocks included in the data stream 9 according to the 2,949,120-bit spacing corresponding to the new Ethernet new encoding mode and the 2,785,280-bit spacing corresponding to the standard Ethernet mode. Because the data stream 9 is a data stream sent by the first device when the first device operates in the standard Ethernet mode, the RX of the second device can successfully lock, according to the 2,785,280-bit spacing corresponding to the standard Ethernet mode, the AM code blocks included in the data stream 9. Therefore, the second device operates in the standard Ethernet mode. For example, as shown in FIG. 14, in response to a success in locking the AM code blocks included in the data stream 9, the RX of the second device sends a mode switching request to the TX of the second device, so that after receiving the mode switching request, the TX of the second device sends a data stream 10 at the boundary of the next AM code block according to a spacing of 2,785,280 bits between the plurality of AM code blocks.

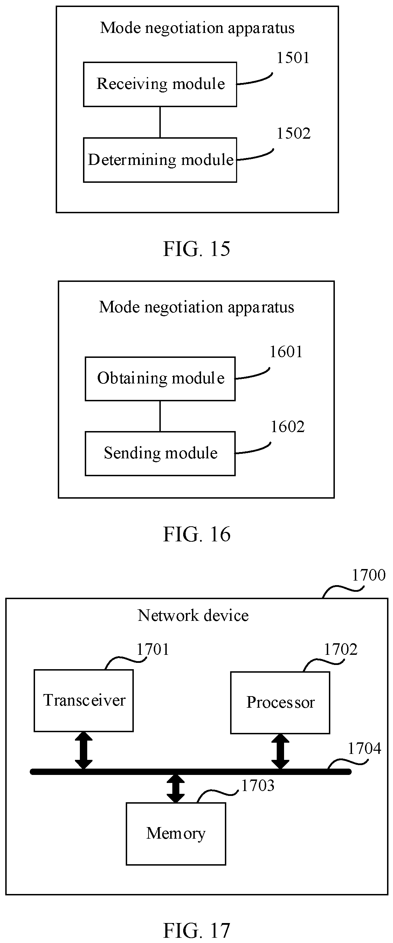

FIG. 15 is a diagram of a structure of a mode negotiation apparatus according to an embodiment of this application. The apparatus is used in a first device, and the first device is the first device shown in FIG. 5 and FIG. 10 to FIG. 14. Based on a plurality of modules shown in FIG. 15 below, the mode negotiation apparatus shown in FIG. 15 can perform all or some of the operations performed by the first device. It should be understood that the apparatus may include more additional modules than the shown modules, or a part of the shown modules are omitted. This is not limited in embodiments of this application. As shown in FIG. 15, the apparatus includes:
a receiving module 1501, configured to receive a first data stream sent by a second device, where the first data stream includes a plurality of first AM code blocks, and a spacing between the plurality of first AM code blocks corresponds to an operating mode of the second device; and
a determining module 1502, configured to lock, according to at least one first reference spacing, the first AM code blocks included in the first data stream, and determine the operating mode of the second device according to a first reference spacing at which the first AM code blocks are successfully locked, where one first reference spacing corresponds to one operating mode of the first device.

In a possible implementation, there are a plurality of first reference spacings at which the first AM code blocks are successfully locked, and the determining module 1502 is configured to determine, from operating modes corresponding to the plurality of first reference spacings at which the first AM code blocks are successfully locked, an operating mode with a highest priority as the operating mode of the second device.

In a possible implementation, there are a plurality of first reference spacings at which the first AM code blocks are successfully locked, and the determining module 1502 is configured to determine, as the operating mode of the second device, an operating mode corresponding to a smallest first reference spacing among the plurality of first reference spacings at which the first AM code blocks are successfully locked.

**In** a possible implementation, the determining module 1502 is further configured to operate in the operating mode of the second device.

**In** a possible implementation, the determining module 1502 is configured to send a second data stream to the second device, where the second data stream includes a plurality of second AM code blocks, and a spacing between the plurality of second AM code blocks is the same as the spacing between the plurality of first AM code blocks.

**In** a possible implementation, the receiving module 1501 is further configured to receive a third data stream sent by the second device, where the third data stream includes a plurality of third AM code blocks, and a spacing between the plurality of third AM code blocks corresponds to the operating mode of the second device; and the determining module 1502 is further configured to lock, according to the at least one first reference spacing, the third AM code blocks included in the third data stream, and in response to a failure in locking the third AM code blocks included in the third data stream, operate in a target operating mode from the at least one operating mode of the first device.

In a possible implementation, the determining module 1502 is configured to send a fourth data stream to the second device, where the fourth data stream includes a plurality of fourth AM code blocks, and a spacing between the plurality of fourth AM code blocks corresponds to the target operating mode.

In a possible implementation, the target operating mode is an operating mode with a highest priority in the at least one operating mode.

In a possible implementation, a first reference spacing corresponding to the target operating mode is a smallest value of the first reference spacing corresponding to the at least one operating mode.

In a possible implementation, the target operating mode is a standard Ethernet mode.

In the apparatus provided in this embodiment of this application, the spacing between the plurality of AM code blocks corresponds to the operating mode, and by locking the first AM code blocks in the first data stream according to the at least one first reference spacing, the first device can determine the operating mode of the second device according to the first reference spacing at which the first AM code blocks are successfully locked. The mode negotiation method is simple and efficient. In addition, because the operating mode of the second device corresponds to the spacing between the plurality of first AM code blocks, the second device does not need to transmit operating mode information other than the AM code blocks to the first device. In the apparatus provided in this embodiment of this application, a manner of transmitting the operating mode information is simpler, and mode negotiation overheads are relatively low. In addition, the apparatus provided in this embodiment of this application is applicable to both a device having an electrical interface and a device having an optical interface, providing a relatively wide scope of application.

FIG. 16 is a diagram of a structure of a mode negotiation apparatus according to an embodiment of this application. The apparatus is used in a second device, and the second device is the second device shown in FIG. 5 and FIG. 10 to FIG. 14. Based on a plurality of modules shown in FIG. 16 below, the mode negotiation apparatus shown in FIG. 16 can perform all or some of the operations performed by the second device. It should be understood that the apparatus may include more additional modules than the shown modules, or a part of the shown modules are omitted. This is not limited in embodiments of this application. As shown in FIG. 16, the apparatus includes:
an obtaining module 1601, configured to obtain a first data stream, where the first data stream includes a plurality of first AM code blocks, and a spacing between the plurality of first AM code blocks corresponds to an operating mode of the second device; and
a sending module 1602, configured to send the first data stream to a first device.

In a possible implementation, the obtaining module 1601 is further configured to receive a fourth data stream, where the fourth data stream includes a plurality of fourth AM code blocks, and a spacing between the plurality of fourth AM code blocks corresponds to an operating mode of the first device; and lock, according to at least one second reference spacing, the fourth AM code blocks included in the fourth data stream, and in response to a failure in locking the fourth AM code blocks included in the fourth data stream, perform the operations of obtaining the first data stream and sending the first data stream to the first device, where one second reference spacing corresponds to one operating mode of the second device.

In a possible implementation, an operating mode corresponding to the spacing between the plurality of first AM code blocks is an operating mode with a highest priority in the at least one operating mode of the second device.

In a possible implementation, the spacing between the plurality of first AM code blocks is a smallest value of the second reference spacing corresponding to the at least one operating mode of the second device.

In the apparatus provided in this embodiment of this application, the spacing between the plurality of AM code blocks corresponds to the operating mode, and the second device sends the first data stream including the plurality of first AM code blocks to the first device, so that the first device can determine the operating mode of the second device. The mode negotiation method is simple and efficient. In addition, because the operating mode of the second device can be determined based on the first reference spacing at which the first AM code blocks are successfully locked, the second device does not need to transmit operating mode information other than the AM code blocks to the first device. In the apparatus provided in this embodiment of this application, a manner of transmitting the operating mode information is simpler, and mode negotiation overheads are relatively low. In addition, the apparatus provided in this embodiment of this application is applicable to both a device having an electrical interface and a device having an optical interface, providing a relatively wide scope of application.

It should be understood that, when the apparatuses provided in FIG. 15 and FIG. 16 above implement the functions of the apparatuses, division of the foregoing functional modules is used as an example for description. In actual application, the foregoing functions may be allocated to different functional modules for implementation as required. In other words, the internal structure of the device is divided into different functional modules, to implement all or part of the functions described above. In addition, the apparatuses provided in the foregoing embodiments and the method embodiments belong to the same concept. For specific implementation processes thereof, refer to the method embodiments. Details are not described herein.

For a specific hardware structure of the device in the foregoing embodiments, refer to a network device 1700 shown in FIG. 17, including a transceiver 1701, a processor 1702, and a memory 1703. The transceiver 1701, the processor 1702, and the memory 1703 are connected through a bus 1704. The transceiver 1701 is configured to receive a data stream and send a data stream. The memory 1703 is configured to store instructions or program code. The processor 1702 is configured to invoke the instructions or the program code in the memory 1703, to enable the device to perform the related processing steps of the first device or the second device in the foregoing method embodiments. In a specific embodiment, the network device 1700 in this embodiment of this application may correspond to the first device or the second device in the foregoing method embodiments. The processor 1702 in the network device 1700 reads the instructions or the program code in the memory 1703, to enable the network device 1700 shown in FIG. 17 to perform all or some of the operations performed by the first device or the second device.

The network device 1700 may further correspond to the apparatuses shown in FIG. 15 and FIG. 16. For example, the receiving module 1501 and the sending module 1602 in FIG. 15 and FIG. 16 are equivalent to the transceiver 1701, and the determining module 1502 and the obtaining module 1601 are equivalent to the processor 1702.

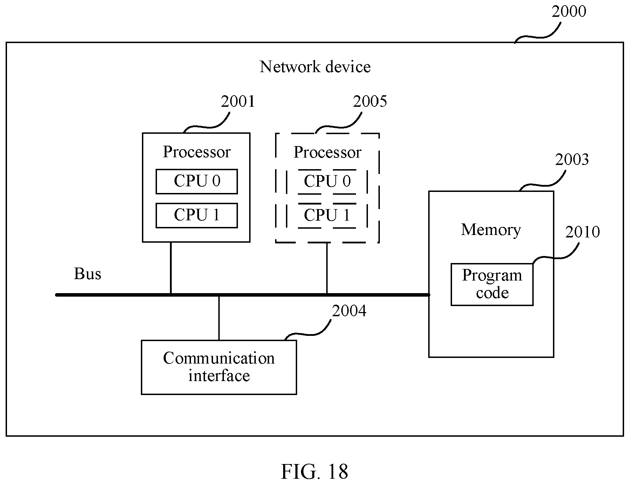

FIG. 18 is a diagram of a structure of a network device 2000 according to an example embodiment of this application. The network device 2000 shown in FIG. 18 is configured to perform the operations related to the mode negotiation method shown in FIG. 5, FIG. 10, and FIG. 11. The network device 2000 is, for example, a switch or a router.

As shown in FIG. 18, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one thick line is used to represent the bus in FIG. 18, but this does not mean that there is only one bus or only one type of bus. In addition to being connected through the bus, the components of the network device 2000 in FIG. 18 may alternatively be connected in another manner. A manner in which the components are connected is not limited in embodiments of the present invention.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other optical disc storage, an optical disc storage (including compact disc, laser disc, optical disc, digital versatile disc, Blu-ray disc, and the like), a magnetic disk storage medium or another magnetic storage device, or any other medium that can be used to carry or store desired program code in the form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 uses any apparatus such as a transceiver, and is configured to communicate with another device or a communication network. The communication network may be an Ethernet, a radio access network (RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 18. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 in FIG. 18. Each of the processors may be a single-core processor (single-CPU) or a multi-core processor (multi-CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, a sensing device, or the like.

In some embodiments, the memory 2003 is configured to store program code 2010 for executing the solutions of this application, and the processor 2001 may execute the program code 2010 stored in the memory 2003. In other words, the network device 2000 may implement the mode negotiation method in the method embodiment through the processor 2001 and the program code 2010 in the memory 2003. The program code 2010 may include one or more software modules. Optionally, the processor 2001 may also store program code or instructions for executing the solutions of this application.

In a specific embodiment, the network device 2000 in this embodiment of this application may correspond to the first device or the second device in the foregoing method embodiments. The processor 2001 in the network device 2000 reads the program code 2010 in the memory 2003 or the program code or the instruction stored in the processor 2001, to enable the network device 2000 shown in FIG. 18 to perform all or some of the operations performed by the first device or the second device.

The network device 2000 may further correspond to the apparatuses shown in FIG. 15 and FIG. 16. Each functional module in the apparatuses shown in FIG. 15 and FIG. 16 is implemented by software of the network device 2000. In other words, the functional modules included in the apparatuses in FIG. 15 and FIG. 16 are generated after the processor 2001 of the network device 2000 reads the program code 2010 stored in the memory 2003. For example, the receiving module 1501 and the sending module 1602 in FIG. 15 and FIG. 16 are equivalent to the communication interface 2004, and the determining module 1502 and the obtaining module 1601 are equivalent to the processor 2001 and/or the processor 2005.

The steps of the methods shown in FIG. 5, FIG. 10, and FIG. 11 are completed by using an integrated logic circuit of hardware in a processor of the network device 2000, or by using instructions in the form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps of the foregoing methods in combination with hardware of the processor. To avoid repetition, details are not described herein again.

Based on the network devices shown in FIG. 17 and FIG. 18 above, an embodiment of this application further provides a network system. The system includes a first device and a second device. For example, the first device is the network device 1700 shown in FIG. 17 or the network device 2000 shown in FIG. 18, and the second device is the network device 1700 shown in FIG. 17 or the network device 2000 shown in FIG. 18.

For the methods performed by the first device and the second device, refer to the related descriptions of the embodiments shown in FIG. 5, FIG. 10, and FIG. 11. Details are not described herein again.

It should be understood that the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor or any conventional processor or the like. It should be noted that the processor may be a processor that supports an advanced reduced instruction set machine (advanced RISC machines, ARM) architecture.

Further, in an optional embodiment, the memory may include a read-only memory and a random access memory, and provide instructions and data to the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limiting description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A computer-readable storage medium is further provided. The storage medium stores at least one program instruction or code. When the program instruction or the code is loaded and executed by a processor, a computer is enabled to implement the mode negotiation methods in FIG. 5, FIG. 10, and FIG. 11.

This application provides a computer program (product). When the computer program is executed by a computer, a processor or a computer may be enabled to perform the corresponding steps and/or procedures in the foregoing method embodiments.

A chip is provided. The chip includes a processor, configured to invoke, from a memory, instructions stored in the memory and run the instructions, to enable a communication device on which the chip is installed to perform the methods in the foregoing aspects.

For example, the chip further includes an input interface, an output interface, and the memory. The input interface, the output interface, the processor, and the memory are connected through an internal connection path.

A device is further provided. The device includes the foregoing chip. Optionally, the device is a network device. For example, the device is a router, a switch, or a server.

All or some of the foregoing embodiments may be implemented by using software, hardware, firmware, or any combination thereof. When software is used to implement the embodiments, all or some of the embodiments may be implemented in the form of a computer program product or a computer program. The computer program product or the computer program includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When software is used to implement the embodiments, all or some of the embodiments may be implemented in the form of a computer program product. The computer program product includes one or more computer program instructions. **In** an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. **In** various embodiments, the functions of the program modules may be combined or split between the described program modules. The machine-executable instructions for the program module may be executed locally or within a distributed device. **In** the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division of the modules is merely division of logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate components may or may not be physically separate, and components displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in the form of hardware, or may be implemented in the form of a software functional module.

If the integrated module is implemented in the form of a software functional module and sold or used as an independent product, the integrated module may be stored in a computer-readable storage medium. Based on this understanding, the technical solutions of this application essentially, or the part contributing to the conventional technology, or all or some of the technical solutions may be implemented in the form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items that have basically same functions. It should be understood that there is no logical or time sequence dependency between "first", "second", and "nth", and a quantity and an execution sequence are not limited. It should also be understood that although the following descriptions use terms such as "first" and "second" to describe various elements, these elements should not be limited by the terms. These terms are simply used to distinguish one element from another. For example, without departing from a scope of the various examples, a first device may be referred to as a second device, and similarly, a second device may be referred to as a first device. Both the first device and the second device may be network devices of any type, and in some cases, may be separate and different network devices.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "an embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to the same embodiment. In addition, these particular features, structures, or characteristics may be combined in one or more embodiments by using any appropriate manner.

## Claims

1. A mode negotiation method, wherein the method comprises:
receiving, by a first device, a first data stream sent by a second device, wherein the first data stream comprises a plurality of first alignment marker AM code blocks, and a spacing between the plurality of first AM code blocks corresponds to an operating mode of the second device; and
locking, by the first device according to at least one first reference spacing, the first AM code blocks comprised in the first data stream, and determining the operating mode of the second device according to a first reference spacing at which the first AM code blocks are successfully locked, wherein one first reference spacing corresponds to one operating mode of the first device.

2. The method according to claim 1, wherein there are a plurality of first reference spacings at which the first AM code blocks are successfully locked, and the determining the operating mode of the second device according to a first reference spacing at which the first AM code blocks are successfully locked comprises:
determining, from operating modes corresponding to the plurality of first reference spacings at which the first AM code blocks are successfully locked, an operating mode with a highest priority as the operating mode of the second device.

3. The method according to claim 1, wherein there are a plurality of first reference spacings at which the first AM code blocks are successfully locked, and the determining the operating mode of the second device according to a first reference spacing at which the first AM code blocks are successfully locked comprises:
determining, as the operating mode of the second device, an operating mode corresponding to a smallest first reference spacing among the plurality of first reference spacings at which the first AM code blocks are successfully locked.

4. The method according to any one of claims 1 to 3, wherein after the determining the operating mode of the second device according to a first reference spacing at which the first AM code blocks are successfully locked, the method further comprises:
operating, by the first device, in the operating mode of the second device.

5. The method according to claim 4, wherein the operating, by the first device, in the operating mode of the second device comprises:
sending, by the first device, a second data stream to the second device, wherein the second data stream comprises a plurality of second AM code blocks, and a spacing between the plurality of second AM code blocks is the same as the spacing between the plurality of first AM code blocks.

6. The method according to any one of claims 1 to 5, wherein the method further comprises:
receiving, by the first device, a third data stream sent by the second device, wherein the third data stream comprises a plurality of third AM code blocks, and a spacing between the plurality of third AM code blocks corresponds to the operating mode of the second device; and
locking, by the first device according to the at least one first reference spacing, the third AM code blocks comprised in the third data stream, and in response to a failure in locking the third AM code blocks comprised in the third data stream, operating, by the first device, in a target operating mode from the at least one operating mode of the first device.

7. The method according to claim 6, wherein the operating, by the first device, in a target operating mode from the at least one operating mode of the first device comprises:
sending, by the first device, a fourth data stream to the second device, wherein the fourth data stream comprises a plurality of fourth AM code blocks, and a spacing between the plurality of fourth AM code blocks corresponds to the target operating mode.

8. The method according to claim 6 or 7, wherein the target operating mode is an operating mode with a highest priority in the at least one operating mode.

9. The method according to claim 6 or 7, wherein a first reference spacing corresponding to the target operating mode is a smallest value of the first reference spacing corresponding to the at least one operating mode.

10. The method according to claim 6 or 7, wherein the target operating mode is a standard Ethernet mode.

11. A mode negotiation method, wherein the method comprises:
obtaining, by a second device, a first data stream, wherein the first data stream comprises a plurality of first alignment marker AM code blocks, and a spacing between the plurality of first AM code blocks corresponds to an operating mode of the second device; and
sending, by the second device, the first data stream to a first device.

12. The method according to claim 11, wherein the method further comprises:
receiving, by the second device, a fourth data stream, wherein the fourth data stream comprises a plurality of fourth AM code blocks, and a spacing between the plurality of fourth AM code blocks corresponds to an operating mode of the first device; and
locking, by the second device according to at least one second reference spacing, the fourth AM code blocks comprised in the fourth data stream, and in response to a failure in locking the fourth AM code blocks comprised in the fourth data stream, performing the operations of obtaining the first data stream and sending the first data stream to the first device, wherein one second reference spacing corresponds to one operating mode of the second device.

13. The method according to claim 11 or 12, wherein an operating mode corresponding to the spacing between the plurality of first AM code blocks is an operating mode with a highest priority in the at least one operating mode of the second device.

14. The method according to claim 11 or 12, wherein the spacing between the plurality of first AM code blocks is a smallest value of the second reference spacing corresponding to the at least one operating mode of the second device.

15. A mode negotiation apparatus, used in a first device, wherein the apparatus comprises:
a receiving module, configured to receive a first data stream sent by a second device, wherein the first data stream comprises a plurality of first alignment marker AM code blocks, and a spacing between the plurality of first AM code blocks corresponds to an operating mode of the second device; and
a determining module, configured to lock, according to at least one first reference spacing, the first AM code blocks comprised in the first data stream, and determine the operating mode of the second device according to a first reference spacing at which the first AM code blocks are successfully locked, wherein one first reference spacing corresponds to one operating mode of the first device.

16. The apparatus according to claim 15, wherein there are a plurality of first reference spacings at which the first AM code blocks are successfully locked, and the determining module is configured to determine, from operating modes corresponding to the plurality of first reference spacings at which the first AM code blocks are successfully locked, an operating mode with a highest priority as the operating mode of the second device.

17. The apparatus according to claim 15, wherein there are a plurality of first reference spacings at which the first AM code blocks are successfully locked, and the determining module is configured to determine, as the operating mode of the second device, an operating mode corresponding to a smallest first reference spacing among the plurality of first reference spacings at which the first AM code blocks are successfully locked.

18. The apparatus according to any one of claims 15 to 17, wherein the determining module is further configured to operate in the operating mode of the second device.

19. The apparatus according to claim 18, wherein the determining module is configured to send a second data stream to the second device, wherein the second data stream comprises a plurality of second AM code blocks, and a spacing between the plurality of second AM code blocks is the same as the spacing between the plurality of first AM code blocks.

20. The apparatus according to any one of claims 15 to 19, wherein the receiving module is further configured to receive a third data stream sent by the second device, wherein the third data stream comprises a plurality of third AM code blocks, and a spacing between the plurality of third AM code blocks corresponds to the operating mode of the second device; and the determining module is further configured to lock, according to the at least one first reference spacing, the third AM code blocks comprised in the third data stream, and in response to a failure in locking the third AM code blocks comprised in the third data stream, operate in a target operating mode from the at least one operating mode of the first device.

21. The apparatus according to claim 20, wherein the determining module is configured to send a fourth data stream to the second device, wherein the fourth data stream comprises a plurality of fourth AM code blocks, and a spacing between the plurality of fourth AM code blocks corresponds to the target operating mode.

22. The apparatus according to claim 20 or 21, wherein the target operating mode is an operating mode with a highest priority in the at least one operating mode.

23. The apparatus according to claim 20 or 21, wherein a first reference spacing corresponding to the target operating mode is a smallest value of the first reference spacing corresponding to the at least one operating mode.

24. The apparatus according to claim 20 or 21, wherein the target operating mode is a standard Ethernet mode.

25. A mode negotiation apparatus, used in a second device, wherein the apparatus comprises:
an obtaining module, configured to obtain a first data stream, wherein the first data stream comprises a plurality of first alignment marker AM code blocks, and a spacing between the plurality of first AM code blocks corresponds to an operating mode of the second device; and
a sending module, configured to send the first data stream to a first device.

26. The apparatus according to claim 25, wherein the obtaining module is further configured to receive a fourth data stream, wherein the fourth data stream comprises a plurality of fourth AM code blocks, and a spacing between the plurality of fourth AM code blocks corresponds to an operating mode of the first device; and lock, according to at least one second reference spacing, the fourth AM code blocks comprised in the fourth data stream, and in response to a failure in locking the fourth AM code blocks comprised in the fourth data stream, perform the operations of obtaining the first data stream and sending the first data stream to the first device, wherein one second reference spacing corresponds to one operating mode of the second device.

27. The apparatus according to claim 25 or 26, wherein an operating mode corresponding to the spacing between the plurality of first AM code blocks is an operating mode with a highest priority in the at least one operating mode of the second device.

28. The apparatus according to claim 25 or 26, wherein the spacing between the plurality of first AM code blocks is a smallest value of the second reference spacing corresponding to the at least one operating mode of the second device.

29. A network device, wherein the network device comprises a processor, the processor is coupled to a memory, the memory stores at least one program instruction or code, and the at least one program instruction or the code is loaded and executed by the processor, to enable the network device to implement the method according to any one of claims 1 to 14.

30. A network system, wherein the network system comprises a first device and a second device, the first device is configured to perform the method according to any one of claims 1 to 10, and the second device is configured to perform the method according to any one of claims 11 to 14.

31. A computer-readable storage medium, wherein the computer-readable storage medium stores at least one program instruction or code, and when the program instruction or the code is loaded and executed by a processor, a computer is enabled to implement the method according to any one of claims 1 to 14.

32. A computer program product, wherein the computer program product comprises computer program code, and when the computer program code is run by a computer, the computer is enabled to implement the method according to any one of claims 1 to 14.

33. A chip, wherein the chip comprises a processor, and the processor is configured to: invoke, from a memory, instructions stored in the memory and run the instructions, to enable a network device on which the chip is installed to perform the method according to any one of claims 1 to 14.

34. The chip according to claim 33, further comprising an input interface, an output interface, and the memory, wherein the input interface, the output interface, the processor, and the memory are connected through an internal connection path.
